# EUROPEAN PATENT APPLICATION

(11) **EP 0 794 023 A2**
(43) Date of publication of application: **10.09.1997**
(21) Application number: 97102976.4
(22) Date of filing: 24.02.1997
(51) Int. Cl.: B21B 45/02, B21B 27/10

(54) **Cold rolling mill and cold rolling method**

(30) Priority: 05.03.1996 JP 47395/96
(71) Applicant: HITACHI, LTD., Chiyoda-ku, Tokyo 101 (JP)
(72) Inventor: Takakura, Yoshio, Hitachi-shi, Ibaraki 316 (JP); Nihei, Mitsuo, Hitachi-shi, Ibaraki 316 (JP); Yasuda, Kenichi, Hitachinaka-shi, Ibaraki 312 (JP); Hirama, Yukio, Mito-shi, Ibaraki 310 (JP)
(74) Representative: Beetz & Partner Patentanwälte

(57) **Abstract**

An object of the invention is to provide a cold rolling mill and a cold rolling method which are able to effectively carry out rolling lubrication and cooling and roll at a high speed and under high rolling pressure while maintaining a high surface quality.

Rolling lubrication oil (12) is supplied from spray headers (10) for lubrication at an inlet side of a rolling material (1), cooling water (13) is supplied onto the surfaces of work rolls (2) at an exit side of the rolling material (1), and the cooling water (13) is prevented by partition plates (11a) or jackets (17) from being scattered and adhered to the rolling material (1). Further, the rolling lubrication oil (12) and cooling water (13) are collected by a pan (3), separated by a separation tank (4) and recirculated to be used again.

## Description

### BACKGROUND OF THE INVENTION

### TECHNICAL FIELD OF THE INVENTION

The present invention relates to a cold rolling mill having a rolling lubrication mechanism and, more particularly, to a cold rolling mill and a cold rolling method which are suitable for cold rolling, at a high speed, a hard or thin rolling material of high surface quality.

### DESCRIPTION OF PRIOR ART

Cold rolling needs two functions which are rolling lubrication and cooling. The rolling lubrication is for reducing a rolling load and extending the life of a work roll by decreasing a friction coefficient between the work roll and a rolling material. On the other hand, the cooling is for preventing the temperature of the work roll and the rolling material from being excessively raised with the heat generated by plastic working of rolling.

A conventional cold rolling system, provided with the two functions of rolling lubrication and cooling as mentioned above, is disclosed in JP A 59-30417, for example. In this conventional rolling system, neat rolling oil is supplied between the roll and the rolling material or to the rolling material from a rolling material inlet side, thereby effecting rolling lubrication, cooling water is supplied between the roll and the rolling material or to the roll from a rolling mill exit side, thereby cooling, and the rolling oil and the cooling water are collected and separated at another facility and then used again after long time.

Usually, rolling lubrication is carried out by using oil. However, since the oil has a less specific heat than and about a half of that of water, and a less cooling ability, it is difficult to cool by only the oil. Further, the oil has concern about firing which is likely to occur when inconvenience such as breakage of the rolling material takes place. Considering such a thing, in the conventional rolling system, both oil and water were used for rolling lubrication and cooling during rolling.

In case of a rolling material the surface quality of which is not so good, the rolling was effected by supplying an emulsion which is a mixture of water and oil. However, in this case, since water which is called water stain remains on the rolling material surface, the quality of rolling material surface having an excellent luster can not be attained.

When a material which is required for high surface quality such as stainless steel, aluminum is rolled, low viscosity straight oil (concentration of 100%) whose base is mineral oil was used. In this case, the cooling ability was insufficient because only oil was used, and it was impossible to effect rolling at a high speed and under a high rolling pressure.

Further, according to the prior art disclosed in JP A 59-30417, it is possible to effect lubrication by supplying oil from a rolling material inlet side and to effect cooling by supplying cooling water from a rolling mill outlet side. However, a lot of water supplied to the outlet side is splashed on the rolling material after rolling. When the lot of water is slashed on the rolling material after rolling, there is anxiety such that the rolling material may slip when coiled after that and be corroded during storage after coiling, and it is impossible to attain a high surface quality.

### SUMMARY OF THE INVENTION

An object of the present invention is to provide a cold rolling mill and a cold rolling method which are able to effectively carry out rolling lubrication and cooling and to roll at a high speed and under high reduction rolling while maintaining a high surface quality.

In order to achieve the above-mentioned object, the present invention provides a cold rolling mill for cold rolling of a rolling material, comprising a rolling lubrication oil supply means for supplying, between a work roll on a rolling material inlet side and the rolling material, a rolling lubrication oil which is easily separable from water, a cooling water supply means for supplying cooling water to the surface of the work roll from at least one side of the rolling material inlet side and a rolling material exit side, a scatter preventing means for preventing the cooling water from the cooling water supply means to the rolling material from being scattered and adhered, a collecting and separating means for collecting the rolling lubrication oil and the cooling water at a lower portion of the rolling mill and easily separating the rolling lubrication oil and the cooling water, an oil conveying means for conveying the rolling lubrication oil separated by the collecting and separating means to the rolling lubrication oil supply means to recirculate the rolling lubrication oil, and water conveying means for conveying the cooling water separated by the collecting and separating means to the cooling water supply means to recirculate the cooling water.

In the present invention of the above-mentioned construction, the rolling lubrication supply means supplies a rolling lubrication oil between the work roll and the rolling material from a rolling material inlet side, the cooling water supply means supplies a cooling water from at least one side of a rolling material inlet side and a rolling material exit side. At this time, the cooling water is supplied to the work roll surface, and scattering and adhesion of the cooling water from the cooling water supply means to the rolling material is prevented by the scatter preventing means, whereby adhesion of water to at least a rolling material side is prevented, and water does not remain on the rolling material surface. Therefore, it is avoided that the rolling material slips at time of coiling after the rolling and the rolling material corrodes during its storage after the coiling, and a high surface quality can be attained. Further, in particular, a roll side at which heat is likely to stay and which is likely to be raised to a high temperature is cooled, so that a cooling effect is increased.

The rolling lubrication oil and the cooling water which flowed down to the rolling mill lower portion are mixed at the rolling mill lower portion, however, a mixture is easily separated into a lubrication oil and a cooling water in a short time. The lubrication oil separated by the collecting and separating means is conveyed to the rolling lubrication oil supply means by the oil conveying means, and the cooling water separated by the collecting and separating means is conveyed to the cooling water supply means. That is, the rolling lubrication oil and the cooling water are recirculated and used again, so that waste is eliminated.

By the above-mentioned construction, the rolling lubrication and the cooling can be practiced effectively, and rolling at a high speed and under a high rolling pressure is possible while maintaining a high surface quality. Further, there is the possibility that a small amount of cooling water is mixed into the rolling lubrication oil separated by the collecting and separating means, and even if a little amount of oil is mixed with the cooling water for roll cooling and becomes an emulsion, the cooling ability does not almost change.

In the above-mentioned construction, the scatter preventing means is preferable to be a partition plate provided so as to prevent scattering and adhering of cooling water to at least a rolling material exist side. Thereby, scattering and adhesion of the cooling water from the cooling water supply means to the rolling material can be prevented.

Further, a jacket can be provided as the above-mentioned scatter preventing means. Thereby, the cooling water from the cooling water supply means to the rolling material is enclosed by the jacket and scattering and adhering of the cooling water from the cooling water supply means to the rolling material can be further prevented. In particular, in this case, since the jacket encloses the cooling water and further prevents scattering of the cooling water from cooling water supply means to the rolling material, an amount of cooling water mixed with the rolling lubrication oil collected in the collecting and separating means becomes small, and it becomes very easy to separate the rolling lubrication oil and the cooling water by the collecting and separating means.

Further, as the above-mentioned rolling lubrication oil, it is preferable to use oil which has a base oil using at least one of mineral oil and synthetic ester and does not include fatty acid and emulsifier which are good in emulsifiability with water. By making it so as not to include an additive promoting emulsification such as fatty acid and emulsifier, separability from water becomes good, and separation step can be effected rapidly in the correcting and separating means. Of course, a little emulsification can be allowed and it also can be allowed to include a little amount of the additive such as the above-mentioned fatty acid and emulsifier.

Further, according to the present invention there is provided a cold rolling method of cold rolling a rolling material, characterized by supplying, between a work roll on a rolling material inlet side and a rolling material, a rolling lubrication oil which is easily separable from water, supplying a cooling water to a surface of the work roll from at least one side of the rolling material inlet side and a rolling material exit side, and preventing, by a partition plate, the cooling water from being scattered and adhered to the rolling material, collecting the rolling lubrication oil and the cooling water at a lower portion of the rolling mill and separating the rolling lubrication oil and the cooling water, and recirculating the rolling lubrication oil and the cooling water to supply them again.

Or, according to the present invention, there is provided a cold rolling method of cold rolling a rolling material, characterized by supplying, between a work roll on a rolling material inlet side and a rolling material, a rolling lubrication oil which is easily separable from water, supplying cooling water to a surface of the work roll from at least one side of the rolling material inlet side and a rolling material exit side, and surrounding the cooling water by a jacket, collecting the rolling lubrication oil and the cooling water at a lower portion of said rolling mill, separating the rolling lubrication oil and the cooling water, and recirculating the rolling lubrication oil and the cooling water to supply them again.

### BRIEF DESCRIPTION OF THE DRAWINGS:

Fig. 1 is a view for explanation of a cold rolling mill and a cold rolling method of a first embodiment of the present invention;
Fig. 2 is a view for explanation of a cold rolling mill and a cold rolling method of a second embodiment of the present invention;
Fig. 3 is a view for explanation of a cold rolling mill and a cold rolling method of a third embodiment of the present invention; and
Fig. 4 is a view for explanation of a cold rolling mill and a cold rolling method of a fourth embodiment of the present invention.

### DESCRIPTION OF EMBODIMENTS OF THE INVENTION

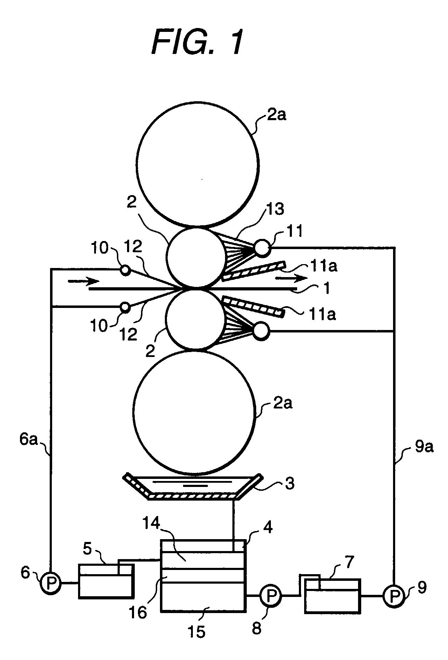

A first embodiment of the invention is explained, referring to Fig. 1.

Fig. 1 is a figure for explaining a cold rolling mill and a cold rolling method of the first embodiment. The rolling mill shown in Fig. 1 comprises work rolls 2 for rolling a rolling material 1, reinforcing rolls 2a backing up the work rolls 2, spray headers 10 for lubrication at an inlet side of the rolling material 1, and spray headers 11 for cooling and partition plates 11a at an exit side of the rolling material 1. The partition plates 11a are mounted so as to abut the work rolls 2. A pan 3 and separating tank 4 are mounted under the work rolls 2 and the reinforcing rolls 2a. An oil exclusive use tank 5, an oil conveying pump 6 and an oil conveying pipe line 6a are connected to an upper portion of the separation tank 4, and a first water conveying pump 8, a water exclusive use tank 7, a second water conveying pump 9 and a water conveying pipe line 9a are connected to a lower portion of the separation tank 4 in turn. Further, the oil conveying pipe line 6a and the water conveying pipe line 9a are connected to the spray headers 10 for lubrication oil and the spray headers 11 for cooling, respectively.

A rolling lubrication oil 12 is supplied between the work rolls 2 and the rolling material 1, that is, to a roll bites from the spray headers 10 for lubrication at the inlet side of the rolling material 1. On the other hand, a cooling water 13 is jetted in spray form onto the surfaces of the work rolls 2. The rolling material 1 is contacted with the work rolls cooled, whereby it is avoided that the temperature is raised.

The above-mentioned lubrication oil 12 and the cooling water 13 are collected in the pan 3 and mixed, and flowed down into the separation tank 4. In the separation tank 4, water sinks in a lower portion and oil floats to an upper portion, whereby it is separated into three layers of an upper layer of oil 14, a lower layer of water 15 and an intermediate layer 16 of mixture (emulsion) of water and oil. The thickness of the intermediate layer 16 of them changes according to oil composition and other conditions. The oil 14 of upper layer after separation is sent to the oil exclusive use tank 5 to be stored temporarily, conveyed to the spray header 10 for lubrication by the oil conveying pump 6 through the oil conveying pipe line 6a, and supplied between the work rolls 2 and the rolling material 1 as rolling lubrication oil 12 again. The water 15 of lower layer in the separation tank 4 is sent to the water exclusive use tank 7 by the first water conveying pump 9 to be stored temporarily, sent to the spray headers 11 for cooling by the second water conveying pump 9 through the water conveying pipe line 9a, and is jetted in spray form onto the surfaces of the work rolls 2 as the cooling water 13 again. That is, both of the rolling lubrication oil 12 and the cooling water 13 are recirculated to be used again.

Here, the cooling water 13 sprayed in spray form from the cooling spray headers 11 is scattered in other direction than the direction of the work rolls 2, but the partition plates 11a abutted to the work rolls 2 prevent scattering to the direction of the rolling material 1, so that the water scattering to at least a side of the rolling material 1 can be prevented. Therefore, water does not remain on the surface of the rolling material 1, inconvenience such as water stain does not occur, whereby slipping of the material at a time of coiling and corrosion of the rolling material 1 during storage after coiling can be avoided, and a high surface quality which is excellent in luster can be attained.

In usual, working heat generated by rolling which is plastic working is transferred to the work rolls 2 and the rolling material 1, and the heat is more likely to be stay in the work rolls 2 which are always in contact with the rolling material. In this embodiment, since the work rolls 2 are cooled at an exit side of the rolling material 1, an effective cooling effect is attained and of course, penetration of the cooling water into the roll bite can be avoided. Alternatively, the cooling the work rolls 2 can be performed at an inlet side of the rolling material, whereby a similar effect to the above-mentioned effect can be attained.

As the rolling lubrication oil 12, mineral oil or synthetic ester, or a substance which includes mixed oil of mineral oil and synthetic ester as a base oil (desirably, straight oil of the concentration of 100%), and does not include, to the utmost, fatty acid, emulsifier, etc. which have good emulsification with water. Since the rolling lubrication oil is formed so as not to include to the utmost an additive promoting emulsification such as fatty acid and emulsifier, the rolling lubrication oil becomes good in separability with water, and a separation process can be practiced rapidly in the separation tank 4. For example, an oil which has a mineral oil as a base oil and the viscosity of about 40 cst can be used for cold rolling of stainless steel, in this case, the oil and water are sufficiently separated by the separation tank 4 for about 5 minutes. Of course, emulsification to a small extent can be allowed, and it can be allowed to include a little amount of the above-mentioned additive such as fatty acid, emulsifier.

On the other hand, among other conventional cold rolling systems, there is a cold rolling system which uses an emulsion of mixture of water and oil for the for both of rolling lubrication and cooling. In the cold rolling system, when cooling is effected at an exit side of the rolling material, the emulsion is adhered to the rolling material after rolling and it was difficult to remove the emulsion before coiling the material, so that cooling at the exit side of the rolling material did not effected, therefore, a high cooling efficiency could not be expected.

On the contrary, in the present embodiment, since oil is not included in the cooling water 13 supplied from an exit side of the rolling material 1, even if a little amount of water of which the scatter can not be prevented by the partition plate 11a reaches to the surface of the rolling material 1, it is very easy to remove. Further, the rolling lubrication oil 12 is squeezed out between the work rolls 2 and the rolling material 1 to be a very little amount, and the very small amount of oil functions effectively to prevent corrosion of the rolling material 1 during storage after rolling.

According to the present embodiment as mentioned above, since the rolling lubrication oil 12 is supplied from the inlet side of the rolling material 1, the cooling water 13 is supplied to the surface of the work rolls 2 at the exit side of the rolling material 1, and the cooling water 13 is prevented by the partition plate 11a from being scattered and adhered to the rolling material 1, adhesion of the cooling water to the surface of the rolling material 1 and penetration of the cooling water into the rolling bite can be avoided as well as rolling lubrication and cooling are effectively carried out, therefore, it can be avoided for the rolling material 1 to slip at time of coiling thereof and to corrode after rolling. Further, since the rolling lubrication oil 12 and the cooling water 13 are collected in the pan 3 and easily separated by the separation tank 4, and both of them are recirculated to be used again, the lubrication oil 12 and the cooling water 13 can be used without waste, and since the rolling lubrication oil 12 which has a good separability with water is used, separation process in the separation tank 4 can be practiced rapidly.

For example, in case of conventional cold rolling of a stainless steel strip, rolling speed is limited in order to maintain a high surface quality, when raw oil(neat oil) was used as the rolling lubrication oil, the rolling speed was about 600 m/min. at most, and when an emulsion was used, the rolling speed was about 800-1000 m/min. at most. However, according to the present embodiment, it is possible to roll under a high pressure and at a high speed of 1000 m/min. or more. In particular, it can be attributed to an improvement of productivity of high surface quality material such as stainless steel, aluminum, etc., and considering simply in view of that cooling water has a cooling ability of two times that of oil, an improvement of productivity of two times or more is possible. Further, hitherto, in case of cold rolling of aluminum, reverse rolling and tandem rolling were almost impossible because the material was overheated, however, when the present embodiment is applied, it is possible to effect the reverse rolling or tandem rolling of aluminum.

As the result as mentioned above, rolling lubrication and cooling are effectively practiced, and it is possible to roll at a high speed and under high pressure.

Further, although a little amount of cooling water may be mixed with the rolling lubrication oil separated by the separation tank 4, even if the cooling water for roll cooling is mixed with a small amount of oil and becomes emulsion, the cooling ability does not almost change.

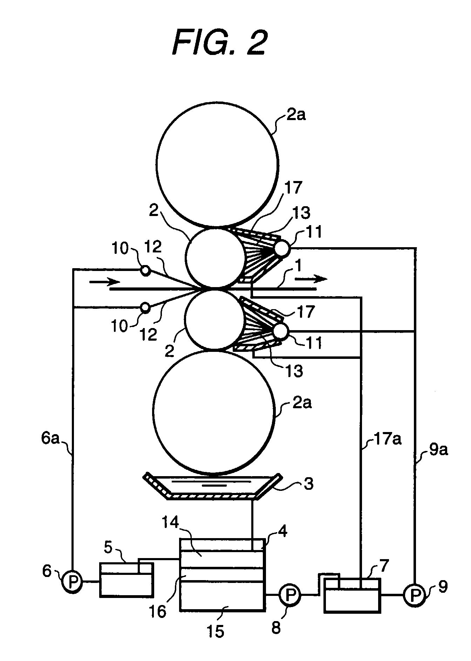

A second embodiment of the present invention is explained referring to Fig. 2. In Fig. 2, the same or similar elements or members are given the same reference numbers as in Fig. 1.

As shown in Fig. 2, in this embodiment, jackets 17 are provided in stead of the partition plates 11a in Fig. 1, and the cooling water 13 supplied from the exit side of the rolling material 1 to the work rolls 2 is enclosed by the jackets 17. The cooling water is recovered from a lower side of each of the jackets 17, and returned into the water exclusive use tank 7 through a recovery pipe line 17a, and sent again to the cooling spray headers 11 by the second water conveying pump 9. In this embodiment, since the cooling water 13 is enclosed and sealed by the jacket 17, scattering and adhesion of the cooling water 13 from the cooling water header 11 to the rolling material 1 are further prevented. The construction other than the above-mentioned construction is the same as in the first embodiment.

However, it is impossible to completely seal the cooling water by the jacket 17, and a little amount of water leakage is unavoidable. However, the leaked water is collected by the pan 3, and sent to the water exclusive use tank 7 after separation by the separation tank 4, as in the first embodiment. In this embodiment, since the cooling water 13 is enclosed by the jacket 17 and prevented to the utmost from being scattered and leaked, an amount of the cooling water mixed with the rolling lubrication oil collected by the pan 3 becomes small, and separation of the rolling lubrication oil 14 and the cooling water 15 by the separation tank 4 becomes very easy.

According to the above-mentioned present embodiment, in addition to the same effect as attained by the first embodiment, since the cooling water 13 is enclosed and sealed by the jacket 17, scattering and adhesion of the cooling water 13 from the cooling water headers 11 to the rolling material 1 is further prevented, further, an amount of the cooling water mixed with the rolling lubrication oil collected by the pan 3 becomes small, and separation of the rolling lubrication oil 14 and the cooling water 15 by the separation tank 4 becomes very easy.

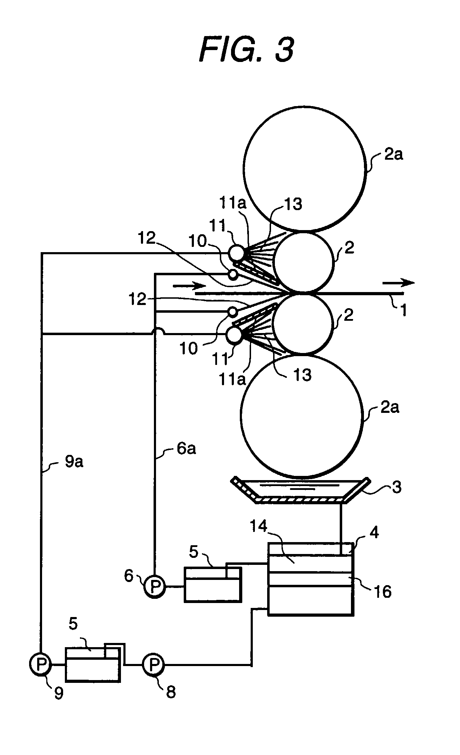

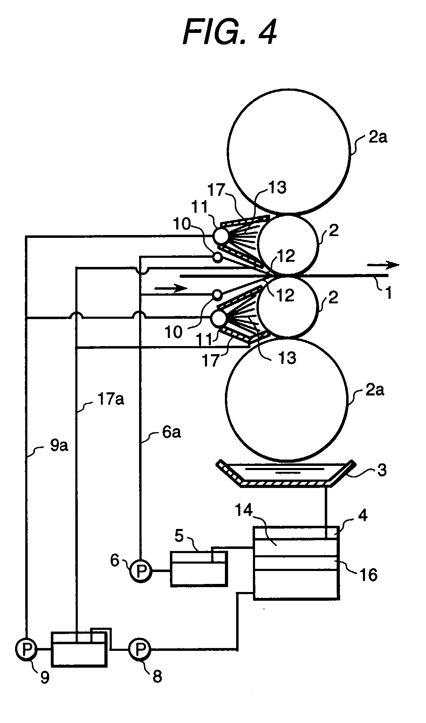

Third and forth embodiments of the present invention are explained, referring to Figs. 3 and 4, respectively. In the third embodiment shown in Fig. 3, the cooling spray headers 11 and the partition plates 11a as explained referring to Fig. 1, are mounted not on the exit side of the rolling material 1 but on the inlet side of the rolling material 1. In the forth embodiment shown in Fig. 4, the cooling spray headers 11 and the jackets 17 as explained referring to Fig. 2 are mounted not on the exit side but on the inlet side of the rolling material 1. The other than the above-mentioned constructions is the same as in Fig. 1 or 2. In Figs. 3 and 4, the same or similar members as in Fig. 1 or 2 are given the same reference numbers as in Fig. 1 or 2.

In those two embodiments, similar effects to the first and second embodiments can be attained.

Further, since it is forecast a little that the cooling water 13 is adhered to the rolling material before rolling by a little amount of leakage and scatter, it is desirable to apply the embodiments mainly to a case where the surface quality is not so severe.

Further, the cooling spray headers 11 and the partition plates as explained in Fig. 1 can be mounted on both of the inlet side and outlet side of the rolling material 1, and the cooling spray headers 11 and the jackets 17 as explained in Fig. 2 also can be mounted on both of the inlet side and the exit side of the rolling material 1.

According to the present invention, since the rolling lubrication oil is supplied from the inlet side of the rolling material, the cooling water is supplied to the surface of the work rolls 2 from at least one side of the inlet side and exit side of the rolling material, and the cooling water is prevented by the scatter preventing means from being scattered and adhered to the rolling material, roll lubrication and cooling can be effectively carried out, in addition thereto, adhesion of the cooling water to the surface of the rolling material and penetration of the cooling water into the rolling bite can be avoided, therefore, it can be avoided that the rolling material slips at time of coiling thereof and corrodes after rolling. Further, since the rolling lubrication oil and the cooling water are separated by collecting and separating means and both of them are recirculated to be used again, the lubrication oil and the cooling water can be used without waste. Further since the rolling lubrication oil which has a good separability with water is used, separation process in the tank can be practiced rapidly.

Therefore, rolling lubrication and cooling are practiced at a high efficiency, and rolling at a high speed and under high pressure can be effected while maintaining a high surface quality. For example, rolling of stainless steel can be done at a high speed and under high pressure although the rolling was limited hitherto. Further, reverse rolling or tandem rolling of aluminum which was impossible hitherto becomes possible and productivity can be improved.

Further, since the jackets are used as the scatter preventing means, scattering and adhesion of the cooling water to the rolling material can be further prevented and an amount of cooling water mixed into the rolling lubrication oil becomes small and separation thereof by the collecting and separating means becomes very easy.

## Claims

1. A cold rolling mill for cold rolling of a rolling material (1), comprising:
rolling lubrication oil supply means (10) for supplying, between a work roll (2) on a rolling material inlet side and said rolling material (1), a rolling lubrication oil (12) which is separable from water;
cooling water supply means (11) for supplying cooling water (13) to a surface of said work roll (2) from at least one side of said rolling material inlet side and a rolling material exit side;
scatter preventing means (11a, 17) for preventing said cooling water from said cooling water supply means (11) to said rolling material (1) from being scattered and adhered;
collecting and separating means (3, 4) for collecting said rolling lubrication oil (12) and said cooling water (13) at a lower portion of said rolling mill and separating said rolling lubrication oil (12) and said cooling water (13);
oil conveying means (6, 6a) for conveying said rolling lubrication oil (12) separated by said collecting and separating means (3, 4) to said rolling lubrication oil supply means (10) to recirculate the rolling lubrication oil (12); and
water conveying means (8, 9, 9a) for conveying said cooling water (13) separated by said collecting and separating means (3, 4) to said cooling water supply means (11) to recirculate said cooling water (13).

2. A cold rolling mill according to claim 1, wherein said scatter preventing means (11a, 17) is a partition plate (11a) provided so as to prevent said cooling water (13) being scattered and adhered to at least a side of said rolling material (1).

3. A cold rolling mill according to claim 1, wherein said scatter preventing means (11a, 17) is a jacket (17) enclosing the cooling water (13) supplied from said cooling water supply means (11) to said rolling material (1).

4. A cold rolling mill according to any one of claims 1 to 3, wherein said rolling lubrication oil (12) has a base oil using at least one of mineral oil and synthetic ester, and is free of fatty acid and emulsifier which have a good emulsifiability with water.

5. A cold rolling method of cold rolling a rolling material (1),
supplying, between a work roll (2) on a rolling material inlet side and a rolling material (1), a rolling lubrication oil (12) which is separable from water;
supplying cooling water (13) to the surface of said work roll (2) from at least one side of said rolling material inlet side and a rolling material exit side, and preventing, by a partition plate (11a), said cooling water (13) from being scattered and adhered to said rolling material (1);
collecting said rolling lubrication oil (12) and said cooling water (13) at a lower portion of said rolling mill and separating said rolling lubrication oil (12) and said cooling water (13); and
recirculating said rolling lubrication oil (12) and said cooling water (13) to supply them again.

6. A cold rolling method of cold rolling a rolling material (1),
supplying, between a work roll (2) on a rolling material inlet side and a rolling material, a rolling lubrication oil (12) which is separable from water;
supplying cooling water (13) to the surface of said work roll (2) from at least one side of said rolling material inlet side and a rolling material exit side, and enclosing said cooling water (13) by a jacket (17);
collecting said rolling lubrication oil (12) and said cooling water (13) at a lower portion of said rolling mill;
separating said rolling lubrication oil (12) and said cooling water (13); and
recirculating said rolling lubrication oil (12) and said cooling water (13) to supply them again.
